(19) **Europäisches Patentamt / European Patent Office / Office européen des brevets**

(11) **EP 2 697 930 B1**

(12) # EUROPEAN PATENT SPECIFICATION

(45) Date of publication and mention
of the grant of the patent:
**08.07.2015 Bulletin 2015/28**

(51) Int Cl.:
***H04L 9/08*** *(2006.01)*   ***H04L 9/30*** *(2006.01)*
***H04L 29/06*** *(2006.01)*

(21) Application number: **12722525.8**

(22) Date of filing: **11.04.2012**

(86) International application number:
**PCT/IB2012/051756**

(87) International publication number:
**WO 2012/140573 (18.10.2012 Gazette 2012/42)**

(54) **A METHOD AND SYSTEM OF CRYPTOGRAPHIC PROCESSING OF A MESSAGE**

VERFAHREN UND SYSTEM ZUR KRYPTOGRAPHISCHEN VERARBEITUNG EINER NACHRICHT

PROCÉDÉ ET SYSTÈME DE TRAITEMENT CRYPTOGRAPHIQUE D'UN MESSAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.04.2011  IT MI20110593**

(43) Date of publication of application:
**19.02.2014  Bulletin 2014/08**

(73) Proprietors:
  • **Bertaccini, Massimo**
    **48025 Riolo Terme (RA) (IT)**
  • **Vodafone Omnitel N.V.**
    **Amsterdam (NL)**
  • **Caldiroli, Giuliano Paolo**
    **20125 Milano (MI) (IT)**
  • **Caporali, Raphael Lorenzo**
    **20124 Milano (IT)**

(72) Inventor: **BERTACCINI, Massimo**
    **48025 Riolo Therme (RA) (IT)**

(74) Representative: **Botti, Mario et al**
**Botti & Ferrari S.r.l.**
**Via Cappellini, 11**
**20124 Milano (IT)**

(56) References cited:
  • **JAN J K ET AL: "A practical design for secure broadcasting using PKD concept", SECURITY TECHNOLOGY, 1993 SECURITY TECHNOLOGY, PROCEEDINGS, INSTITUTE OF ELECTRICAL AND ELECTRONICS ENGINEERS 1993 INTERNATIONAL CARNAHAN CO NFERENCE ON OTTAWA, ONT., CANADA 13-15 OCT. 1993, NEW YORK, NY, USA,IEEE, 13 October 1993 (1993-10-13), pages 22-27, XP010124757, DOI: 10.1109/CCST.1993.386832 ISBN: 978-0-7803-1479-5**
  • **ELGAMAL T: "A PUBLIC KEY CRYPTOSYSTEM AND A SIGNATURE SCHEME BASED ON DISCRETE LOGARITHMS", IEEE TRANSACTIONS ON INFORMATION THEORY, IEEE PRESS, USA, vol. 31, no. 4, 1 July 1985 (1985-07-01), pages 469-472, XP000565224, ISSN: 0018-9448, DOI: 10.1109/TIT.1985.1057074**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 697 930 B1

**Description**

FIELD OF INVENTION

The present invention concerns a method and a system for cryptographic processing of a message.
Particularly, the present invention is advantageously but not exclusively used for communication of a message between two communication units, e.g. two terminals, two nodes of a (peer-to-peer) communication network, or a client and a server, the two communication units communicating over a generally insecure communication channel that is part of a communication network.

BACKGROUND THE INVENTION

One of the most common methods to establish a cryptographic communication uses an asymmetric key algorithm known as the acronym RSA, from the initials of its inventors (Rivest, Shamir, Adleman), which involves the generation of a public key, to be used for encrypting a message into a cryptogram, and a private key, to be used for decrypting the cryptogram and obtain the original message. This method is disclosed in US Patent 4,405,829. In short, the public key is issued by the recipient of the message, to be used by the sender of the message for encryption of the latter, whereas the private key is known to the recipient only and is used for decryption of the cryptogram. The public key and the private key of the RSA algorithm are created from the product of two prime numbers. The security of the RSA method lies in that the private key cannot be calculated by only knowing the public key, but requires the two prime numbers to be known. The only way to determine the private key is to solve the mathematical problem of factorization in prime numbers of the public key, and the solution is a "brute-force" operation, which is computationally rather complex. In general terms, the larger the prime numbers and thus their product, the longer it will take to search for the private key and hence the more secure the cryptography is. Nowadays, certain applications require at least 728-bit keys, in certain cases 1024-bit keys or keys with a even larger number of bits.
Prior art solutions are disclosed in documents: Jan J. K. et al: "A practical design for secure broadcasting using P.K.D concept", SECURITY TECHNOLOGY, 1993 SECURITY TECHNOLOGY, PROCEEDINGS, INSTITUTE OF ELECTRICAL AND ELECTRONICS ENGINEERS 1993 INTERNATIONAL CARNAHAN CO NFERENCE ON OTTAWA, ONT., CANADA 13-15 OCT. 1993, NEW YORK, NY, USA,IEEE, 13 October 1993 (1993-10-13), pages 22-27, DOI: 10.1109/CCST.1993.386832, ISBN: 978-0-7803-1479-5; and Elgamal T.: "A Public Key Cryptosystem and a Signature Scheme Based on Discrete Logarithms", IEEE TRANSACTIONS ON INFORMATION THEORY, IEEE PRESS, USA, vol. 31, no. 4, 1 July 1985 (1985-07-01), pages 469-472, ISSN: 0018-9448, DOI: 10.1109/TIT.1985.1057074.
The applicant has observed that the exponential increase of the computing power of common computers, as well as the recent discoveries about the determinism of prime numebrs potentially affect the security of the RSA method to an increasing extent, unless the number of digits of the two primes is hugely increased. Nevertheless, the latter solution would eventually increase the computational burden of the encryption system.
The Italian patent application BO2009A000383, filed on 12 June 2009, concerns a method of establishing a cryptographic communication which comprises the creation of a "secret" key (K), shared by the sender unit and the recipient unit, which is obtained by the sum modulo p of terms obtained by raising two respective private keys *a* and *b* to a power equal to the number p, where p is a known prime number, and the encryption by the sender unit of a message M into a cryptogram C obtained by the modular product of M and K.
The Applicant has observed that, while the method disclosed in Patent Application BO2009A000383 provides the advantage of using an encryption algorithm that requires a relatively low computational effort, it is still based on an algorithm that uses encryption equations considerably different from those of the RSA algorithm.
The Applicant has noted that RSA is commonly used in applications that require a high security level, such as applications for managing electronic business transactions, and that an encryption system such as the one disclosed in patent application BO2009A000383 may not be readily implemented or may require substantial changes to be made to the operational protocol for use of the encryption algorithm.

SUMMARY OF INVENTION

The present invention concerns a cryptographic processing method and a system that uses an asymmetric cryptography-based scheme. The Applicant has understood that a cryptographic processing method that calculates the cryptogram by a modular arithmetic power function and bases its effectiveness on the discrete logarithm problem to define the exponent of the cryptogram can ensure high security. The discrete logarithm is thought to be a very difficult problem to solve, because unlike the factorization problem, it has many possible solutions and particularly if modular equations modulo p are used, with p being a sufficiently large number, the solution of exponential modular equations is very burdensome, or almost impossible.

In one main aspect, the method of the present invention is based on an asymmetric algorithm that uses private keys and public keys, and derives its robustness from application of modular exponential equations, which are injective (one-way) functions for defining exponents of the encryption (and decryption) equations.

In one aspect, the present invention is directed to a method of cryptographic processing of a message, the method comprising:

> establishing a communication between a first communication unit and a second communication unit in a communication domain comprising a communication channel;
> providing a message T by the first communication unit;
> defining, by the second communication unit, an integer $a$ as a first private key and a number $K_A$ as a first public key, the first public key being a number determined based on a prime integer $p$, a generator prime integer g and the first private key;
> making the first public key $K_A$ available to the first communication unit;
> sharing the first and the second communication units the prime number $p$ and the generator number g;
> defining, by the first communication unit, an integer $b$ as a second private key and a number $K_B$ as a second public key, the second public key being a number determined based on the prime number $p$, the generator number $g$ and the second private key;
> determining by the first communication unit an encryption exponent x by means of the modular equation:

$$\{[K_A{}^b + e_B] \;(\mathrm{mod}\,p)\}^* \; x \equiv 1 \; \mathrm{mod} \; (p\text{-}1),$$

> where $e_B$ is a parameter selected from the group of integers, so that coprimeness of $[K_A{}^b + e_B]$ (mod $p$) and ($p$-1) is verified;
> coding the message T, where coding comprises dividing the message T into at least one message block M, and encrypting by the first communication unit the at least one message block M, thereby obtaining at least one cryptogram C by the modular equation

$$C \equiv M^x \;(\mathrm{mod}\;p).$$

Preferably, the method further comprises, after encryption of the at least one message block M:

> making the second public key $K_B$ and the parameter $e_B$ available to the second communication unit;
> transmitting the at least one cryptogram C to the second communication unit;
> determining by the second communication unit a decryption exponent $y=\{[K_B{}^a + e_B] \;(\mathrm{mod}\;p)\}$, and
> decrypting the at least one cryptogram C thereby obtaining at least one message block M' by the modular equation

$$M' \equiv C^y \;(\mathrm{mod}\;p).$$

Preferably, the method further comprises, after decryption of the at least one cryptogram C, decoding the at least one message block M' obtained from decryption of the cryptogram C, wherein decoding comprises recomposing the at least one message block M' to obtain a message T'. The message T' matches the message T.

Preferably, the method is a method of establishing a cryptographic communication between the first communication unit and the second communication unit.

Preferably, defining an integer $b$ as a second private key comprises selecting, by the first communication unit, an integer coprime to ($p$-1).

In some preferred embodiments, defining a number $b$ as a second private key comprises:

> a) selecting by the first communication unit a first integer as a second private key;
> b) determining whether the first integer is coprime to ($p$-1);
> c) if the result of determining is negative, selecting by the first communication unit a second integer;
> d) determining whether the second integer is coprime to ($p$-1), and
> e) if the result of determining is negative, repeating the steps c) and d) until the result of determining is positive.

Preferably, defining a number $a$ as a first private key comprises selecting, by the second communication unit, an integer coprime to (*p*-1).

In some preferred embodiments, defining a number *a* as a first private key comprises:

f) selecting by the second communication unit a first integer as a first private key;
g) determining whether the first integer is coprime to (*p*-1);
h) if the result of determining is negative, selecting by the second communication unit a second integer;
1) determining whether the second integer is coprime to (*p*-1), and
m) if the result of determining is negative, repeating the steps h) and 1) until the result of determining is positive.

Preferably, the at least one message block M is of a length k smaller than *p*.

Preferably, the generator prime number *g* is different from the prime number *p*.

Preferably, defining, by the second communication unit, a first public key $K_A$ based on a prime number p, a generator prime number *g* and a number *a* comprises generating a prime number *p* and a prime number *g*.

Preferably, defining a first public key comprises calculating the number $K_A$ from the modular equation $K_A \equiv g^a \pmod{p}$.

Preferably, defining a second public key comprises calculating the number $K_B$ from the modular equation $K_B \equiv g^b \pmod{p}$.

In some preferred embodiments, making the first public key $K_A$ available and sharing the prime number *p* and the generator prime number *g* comprises transmitting, by the second communication unit, the first public key, the prime number *p* and the generator number *g* to the first communication unit through the communication channel.

Preferably, making the second public key $K_B$ and the parameter $e_B$ available comprises transmitting, by the first communication unit, the second public key and the parameter $e_B$ through the communication channel.

Preferably, the communication domain is a communication network.

In a further aspect, the present invention relates to a system for cryptographic processing of a message in a communication domain, which comprises:

a first communication unit which comprises a first encrypting device, a first coding device and a first transceiver module;
a second communication unit which comprises a first decrypting device, a first decoding device and a second transceiver module, and
a communication channel apt to connect the first communication unit with the second communication unit by means of the first and second transceiver modules, wherein
the first communication unit is apt to provide a message T;
the second communication unit is apt to define an integer *a* as a first private key and a number $K_A$ as a first public key, the first public key being a number determined based on a prime number *p*, a generator prime number g and the first private key;
the second transceiver module is apt to transmit the first public key $K_A$ to the first communication unit through the communication channel, the first and second communication units being apt to share the prime number *p* and the generator prime number g through the communication channel;
the first communication unit is apt to define an integer *b* as a second private key and a number $K_B$ as a second public key, the second public key being a number determined based on the prime number *p*, the generator number g and the second private key;
the first encrypting device is apt to determine an encryption exponent x by the modular equation

$$\{[K_A{}^b + e_B] \pmod{p}\} * x \equiv 1 \bmod (p-1),$$

where $e_B$ is a parameter selected from the group of integers, so that coprimeness of
$[K_A{}^b + e_B] \pmod{p}$ and (p-1) is verified;
the first coding device is apt to code the message T, where coding comprises dividing the message T into at least one message block M, and
the first encrypting device is apt to encrypt the at least one message block M, thereby obtaining at least one cryptogram C by the modular equation

$$C \equiv M^x \pmod{p}.$$

Preferably, the first transceiver module is apt to transmit the at least one cryptogram C, the second public key $K_B$ and the parameter $e_B$ to the second communication unit (3), and
the first decrypting device is apt to determine a decryption exponent number $y=\{[K_B{}^a + e_B] \ (mod \ p)\}$, and to decrypt the at least one cryptogram C, thereby obtaining at least one message block M' by the modular equation

$$M' \equiv C^y \ (mod \ p).$$

BRIEF DESCRIPTION OF THE FIGURES

Further characteristics and advantages of the invention will be apparent from the following detailed description, which is made with reference to non-limiting embodiments thereof, and to the accompanying figures, in which:

- Figure 1 shows a block diagram of a communication system that implements the method of cryptographic processing of a message between a first communication unit and a second communication unit, according to an embodiment of the present invention; and
- Figure 2 shows a flowchart describing an embodiment of the method of cryptographic processing of a message according to the present invention.

DETAILED DESCRIPTION

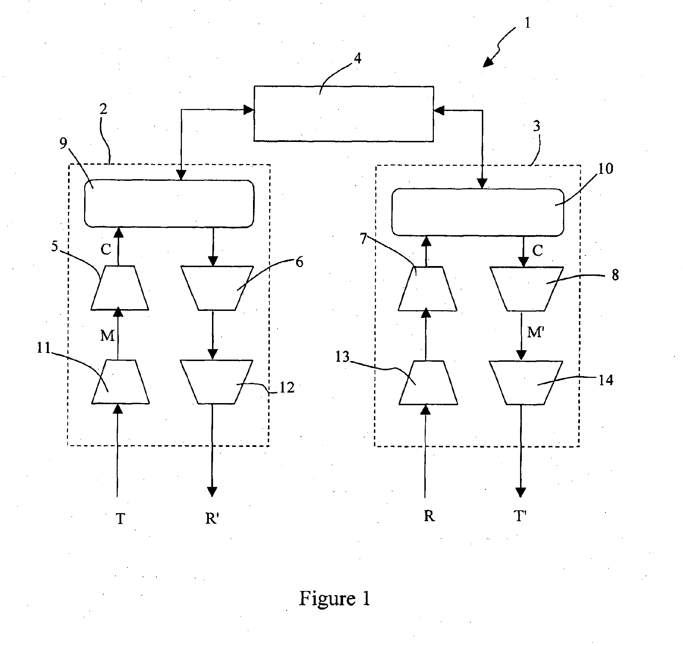

In Figure 1, a communication system apt to establish a cryptographic communication is generally designated by numeral 1. The system 1 comprises at least one first communication unit 2 and one second communication unit 3. Each of the communication units 2 and 3 comprises a respective transceiver module 9 and 10, which is apt to send and/or receive data to/from a communication channel 4 that can connect the transceiver modules 9 and 10 together. Data is transmitted by means of a signal having the format required by the communication channel. In certain embodiments, each communication unit comprises or consists of a terminal or a node for a communication network. The communication channel is part of a larger communication network (not shown). For example, the first and second communication units are two computers (e.g. two personal computers or a client-server pair), the communication network is the Internet, and the communication channel 4 is defined by the connection established between the two computers when they are connected to the Internet. As a further example, the communication network is a cellular network and each communication unit comprises a mobile terminal.
Assume that the communication unit 2 is the sender unit, which wants to send a message T to the communication unit 3 (recipient unit) through the communication channel 4. As used herein, the term message, also termed "plaintext", generally designates data in any form (text, numbers, alphanumeric data, etc.), such as Unicode data.
The communication unit 2 comprises a coding device 11, which is apt to code the message T to be transmitted using a conventional coding. The coding procedure comprises the division of the message T into one or more message blocks M. The coding device 11 is connected to an encrypting device 5, which is apt to encrypt each message block M into a respective cryptogram (encrypted message) C. Without loss of generality, each message block M is represented by an integer, and each respective cryptogram C is represented by a respective integer.
The encrypting device 5 of the communication unit 2 is connected to the transceiver module 9, which is apt to be connected to a decrypting device 8 in the communication unit 3, through the communication channel 4. Particularly, the cryptogram C created by the encrypting device 5 is transmitted to the communication unit 3, that receives it via the transceiver module 10. The latter is connected to the decrypting device 8.
The decrypting device 8 receives the cryptogram C from the transceiver module 10 and decrypts it, thereby creating one or more decrypted message blocks M', each block M' matching a respective original message block M. The message blocks M' are later decoded by a decoding device 14 connected to the decrypting device 8, which is apt to decode the one or more message blocks M', according to the conventional coding that was used by the coding block 11 of the unit 2, into a message T' that matches the original message T.
In case of bidirectional data transmission between the communication units 2 and 3, each unit 2, 3 comprises a respective encrypting device 5, 7 and a respective decrypting device 6, 8. In case of a bidirectional transmission in which the communication unit 3 is the sender unit, the encrypting device 7 of the communication unit 3 is apt to be coupled to the decrypting device 6 of the communication unit 2 through the communication channel 4.
In certain preferred embodiments, each communication unit 2, 3 comprises a respective coding device 11, 13 for coding the message to be transmitted, and a respective decoding device 12, 14 for decoding the received and decrypted message.
Figure 1 indicates the "reverse" flow, in which the second communication unit 3 is the sender unit that wants to send a message R to the first communication unit 2, here the recipient unit. The message R is coded by the coding device 13, sent to the encrypting device 7 which encrypts it and transmits it via the transceiver module 10 and through the communication channel 4 to the transceiver module 9 of the first communication unit 2. The encrypted message received by the transceiver module 9 is transmitted to the decrypting device 6, which decrypts it, and is later decoded by the decoding device 12, to obtain a message R' matching the original message R.

While the block diagram of Figure 1 shows the encrypting device and the decrypting device as distinct units, each unit may comprise a single encrypting/decrypting device, apt to both encrypt and decrypt a message, and implemented, for instance, by means of a software program installed in the communication unit.

The coding device of the first or of the second communication unit may be part of the encrypting device of its respective unit. The decoding device of the first or second communication unit may be part of the decrypting device of its respective unit.

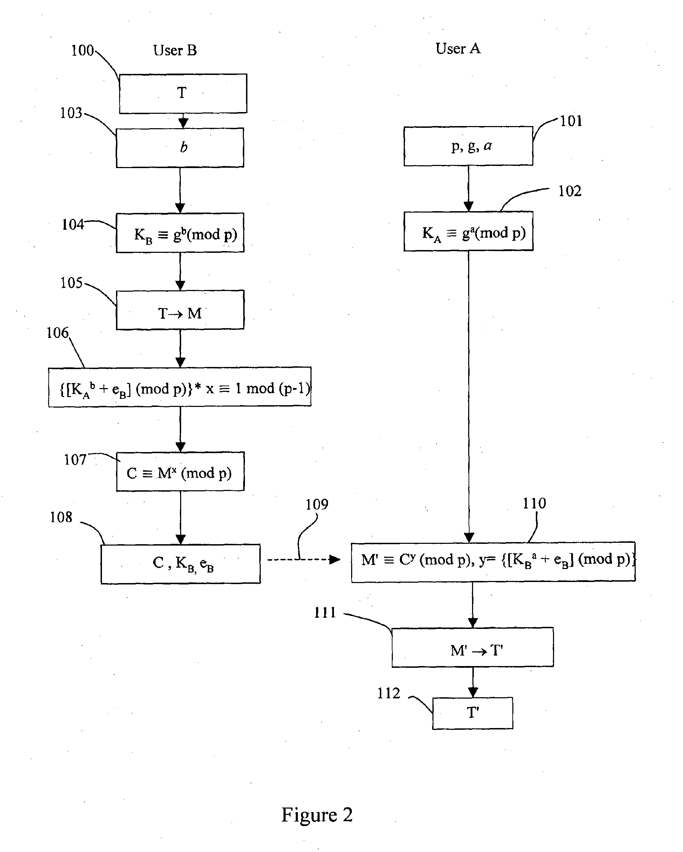

The flowchart of Figure 2 represents an embodiment of the method of cryptographic processing of a message. Particularly, the chart describes a method of establishing a cryptographic communication, which comprises encrypting a message T by a first communication unit and transmitting at least one encrypted message (cryptogram) to a second communication unit. For a better understanding of the invention and without limitation thereto, particularly referring to the embodiment of Figure 1, the communication unit 2 is designated herein as sender unit and the communication unit 3 is designated as recipient unit. The flowchart of Figure 2 is divided into two flows, the one defining the steps carried out by the sender unit, the other defining the steps carried out by the recipient unit. It shall be intended that, if the message T is transmitted in the opposite direction, the communication units 2 and 3 will exchange their sender and recipient roles without changing the flow of cryptographic communication.

Assume two users A and B who want to exchange data through a communication channel. In the example of Figure 2, the user B wants to transmit a message T to the user A from the sender unit to the recipient unit (step 100).

The user A generates a first prime integer $p$ and a second prime integer g, the latter being referred to as a generator number, and selects an integer $a$ forming a private key (step 101). The numbers $g$ and $p$ may be generated by an integer generator device, known per se, whereas the number $a$ is selected by the user A. In one embodiment, the recipient unit comprises a prime number generator device, e.g. an algorithm contained in a commercial library or a developed library "embedded" in the cryptographic processing algorithm. For instance, the prime number generator device may be part of the encrypting device within the recipient unit or be connected thereto.

The numbers $g$ and $p$, which are primes and hence coprime to each other, are different. In case of random generation of prime numbers by the recipient communication unit, such diversity may be checked in a step subsequent to the generation of the numbers $g$ and $p$. In one embodiment, the method comprises: generating a prime integer $p$ and a prime integer g; determining whether the numbers are different; if the step of determining results in $g=p$ (i.e. diversity condition not satisfied), generating a new number $g$ and/or generating a new number $p$ and repeating the step of determining the diversity of $g$ and $p$ and the step of generating a new number $p$ and/or a number g until the diversity of the numbers g and $p$ is satisfied.

In a different embodiment, the recipient unit comprises a prime number generator number, which is apt to generate a first prime number ($p$ or $g$) and a second prime number ($g$ or $p$) other than the first prime number.

In certain preferred embodiments, $p$ is an integer composed of at least 30 digits. Preferably, $g$ is an integer composed of at least 7 digits. The number $a$ is preferably an integer composed of at least 6 digits.

The following mathematical equations are expressed in modular arithmetic. From the numbers $a$, $g$ and $p$, the user A calculates a public key $K_A$, as a modular exponential function defined as:

$$K_A \equiv g^a (\mathrm{mod}\ p), \qquad\qquad\qquad (1)$$

which means that the public key of the user A is defined by a modular exponential equation, modulo $p$, whose exponent is the private key $a$ of the user. For the cryptographic communication to be not easily interceptable, the public key $K_A$ is an integer other than zero and other than 1. If the condition $g \neq p$ is satisfied, then $K_A$ is other than zero. For $K_A$ to result from the equation (1) as other than 1, the integer $a$ selected as a private key shall be coprime to ($p$-1).

In certain embodiments, the number $a$ is selected to be coprime to ($p$-1). If this condition is not satisfied, then the cryptographic processing system may be configured to reject the number $a$ and to notify the user A that a new number $a$ has to be selected as a private key.

According to a preferred embodiment, the cryptographic processing method comprises, after generation of the numbers $p$ and $g$ and selection of the number $a$, and before determination of the public key $K_A$, a process (not shown in Figure 2) of checking that the number $a$ is coprime to ($p$-1). In one embodiment, the method comprises: selecting, by the recipient unit, a first integer $a$ as a private key; determining whether the first number $a$ is coprime to ($p$-1); if the result of determining is negative, selecting a second integer as a private key, and repeating the step of determining and the step of selecting an integer until the result of determining is positive (i.e. coprimeness of *a* and (*p*-1) assessed).

The recipient unit makes the public key $K_A$, determined according to the equation (1), and the numbers *p* and *g* available, e.g. in the communication channel 4 (step 102). The private key *a* is secret, which means that it is known to the user A only. In one embodiment, the user A transmits the numbers $K_A$, *p* and *g* through the communication channel.

In a further embodiment (not shown), the user A and the user B agree the use of a number *p* and a number *g* before cryptographic processing of a message, particularly before establishment of a cryptographic communication.

As used herein, the numbers *p* and *g* are said to be shared by the user A and the user B.

When the user B wants to transmit the message T to the recipient unit 3 (step 100), the sender unit selects an integer *b* as its own secret private key, known to the user B only (step 103). The number *b* is preferably an integer composed of at least 6 digits. The private key *b* is an integer selected to satisfy the coprimeness condition relative to the number (*p*-1). If this condition is not satisfied, then the encrypting system may be configured to reject the number *b* and to notify the user B that a new number *b* has to be selected as a private key.

In one embodiment, the method comprises, after the step of generating the number *b* (step 103), a process (not shown in Figure 2) of checking coprimeness of the numbers *b* and (*p*-1) which comprises: selecting, by the sender unit, a first integer *b* as a private key; determining whether the first number *b* is coprime to (*p*-1); if the result of checking is negative, selecting a second integer as a private key, and repeating the step of checking and the step of selecting an integer as a private key until the result of determining is positive (i.e. coprimeness of *b* and (*p*-1) assessed).

From the generator number *g* and the number *p* made available by the user A (step 101), the user B determines a public key $K_B$ (step 104) by means of the following modular exponential equation:

$$K_B \equiv g^b (\mathrm{mod}\, p). \qquad (2)$$

In the equation (2), the exponent number *b* is the private key of the user B.

For the cryptographic communication to be not easily interceptable, the public key $K_B$ must be an integer other than zero and other than 1. If g is other than *p*, then the public key $K_B$ is other than zero. If *b* is coprime to *(p-1)*, then the public key $K_B$ is other than 1.

If coprimeness of *a* to (*p*-1) and/or of *b* to (*p*-1) and/or diversity of the numbers g and *p* are not assessed in the steps preceding determination of the public key $K_A$ (step 102) and/or determination of the public key $K_B$ (step 104), then preferably, after the steps of determining $K_A$ and $K_B$, the method comprises a step (not shown in Figure 2) of checking from the numbers *a, p* and *g,* that the public key $K_A$ is not zero or 1 and/or, from the numbers *b, p* and *g,* that the public key $K_B$ is not zero or 1.

In one embodiment, after the step of selecting, by the user B, an integer *b* as a private key, the method comprises starting a first check process for checking that the public key $K_B$ defined by the sender unit is not equal to 1, which comprises:

i) defining a public key $K_B$ based on the numbers *p, g* and *b;*
ii) determining whether the public key $K_B$ is equal to 1;
iii) if the public key $K_B$ is found to be equal to 1, selecting a new integer as a private key;
iv) defining a new public key $K'_B$;
v) determining whether the new public key $K'_B$ is equal to 1 and, if the result of determining is positive, repeating the steps iii) and iv) until the public key is determined to be other than 1.

In one embodiment, the method comprises starting a second check process, after the steps of defining $K_A$ and $K_B$ (steps 102 and 104) to check that both the first public key $K_A$ and the second public key $K_B$ are other than zero, which comprises:

vi) determining whether at least one of the public keys $K_A$ and $K_B$ is zero;
vii) if at least one of the public keys $K_A$ and $K_B$ is determined to be zero, selecting a new integer *p* and/or a new integer g;
viii) defining at least one new number as at least one of the public keys;
ix) determining whether the at least one new public key is zero and, if it is, repeating the steps vii) and viii) until the at least one public key is found to be other than zero.

In one embodiment, after the step of selecting, by the user A, an integer *a* as a private key, the method further comprises starting a first check process for checking that the public key $K_A$ defined by the recipient unit is not equal to 1, which comprises:

x) defining a public key $K_A$ based on the numbers $p, g$ and $a;$

xi) determining whether the public key $K_A$ is equal to 1;

xii) if the public key is determined to be equal to 1, selecting a new integer as a private key;

xiii) defining a new public key $K'_A;$

xiv) determining whether the new public key $K'_A$ is equal to 1 and, if the result of determining is positive, repeating the steps xii) and xiii) until the second public key is found to be other than 1.

Once the public key $K_B$ has been determined, the user B makes its public key available to the user A, e.g. by transmitting it to the recipient unit 3 through the communication channel 4, after the step 104.

If the length of the message T is greater than the value of $p$, then the message T needs to be coded to ensure that the message T is identical to the message T' obtained by decrypting the cryptogram received by the recipient unit.

The step of coding the message T comprises dividing the message T into at least one message block ("token") M, where the at least one message block M is of a length equal to an integer k smaller than the integer $p$, i.e. contains data with a number $k<p$ of bits. In certain embodiments, the coding step comprises dividing the message T into a plurality of message blocks M, in which each block has the same length k.

In one embodiment, if the total length of the data contained in the message T is not a multiple of the number $p$, then the coding step comprises coding the message T by means of a reversible protocol, known per se, in which a "padding", preferably random, is added to the message T such that the message T can be divided into an integer number of message blocks, preferably but not necessarily of the same length.

For example, the message to be transmitted is ASCII encoded such that each message block M is represented by a particular decimal code included in the set of decimal codes of the ASCII table.

If the length of the message T is not greater than the number $p$, the message T can be divided into a message block M, so that T corresponds to M.

Without loss of generality, a process of encrypting a single message block M will be described below, considering that the same process is used for each message block M, if the original message T is coded into a plurality of blocks M.

In one embodiment, the step 105 precedes the step 104 or precedes the step 103.

From $K_A$ and $p$, the user B calculates a number x, referred to as an encryption exponent, which is determined by one of the solutions of the modular equations:

$$\{K_A{}^b \ (\text{mod} \ p)\}^* \ x \equiv 1 \ \text{mod} \ (p\text{-}1). \qquad (3)$$

The symbol "*" in the equation indicates the product of the factors $\{K_A{}^b \ (\text{mod} \ p)\}$ and x. It shall be noted that the public key of the user A in the equation (3) is raised, e.g. by the encrypting device of the sender unit, to the power of the private key of the user B.

In certain cases, mainly depending on the number $b$ selected as a private key by the user B, the equation (3) may be unsolvable, that is it is not possible to derive the number x that satisfies the coprimeness condition between $K_A{}^b$ (mod $p$) and ($p$-1). In order to solve the equation, irrespective of the selection of $b$, the Applicant has understood that a parameter may be preferably introduced into the equation (3), for the equation to be always verified, for at least one solution exists. Preferably, a parameter is introduced into the equation (3), which is referred to as iteration parameter $e_B$. In the preferred embodiments, the encryption number x is one of the solutions of the following equation:

$$\{[K_A{}^b + e_B] \ (\text{mod} \ p)\}^* \ x \equiv 1 \ \text{mod} \ (p\text{-}1), \qquad (4)$$

where $e_B$ is the iteration parameter valid for obtaining coprimeness of $[K_A{}^b + e_B]$ (mod $p$) and ($p$-1), for the equation (4) to be solvable.

The solution of the modular equation (4) are mod ($p$-1), which means that the congruence modulo ($p$-1) must be satisfied between the inverse of x and the number $[K_A{}^b+e_B]$, the latter being calculated modulo $p$. The step of determining the encryption exponent is referenced 106 in Figure 2. In one embodiment, the step 106 precedes the step 105.

In the preferred embodiments, the iteration parameter is an integer selected from the group of integers Z={0, $\pm1$, $\pm2$, $\pm3$, ... }. It shall be noted that $e_B$ may be equal to zero, if $\{K_A{}^b$ (mod $p$)$\}$ and ($p$-1) are coprime per se, in which case the equation (4) is equal to the equation (3). It is possible that more than one number selected from the group of integers Z solve the equation (4). In certain cases, a plurality of iteration parameters can solve the equation (4). Particularly, there may be an infinite or very large number of solutions of the equation (4). The encrypting device may be configured to search for the smallest number x that satisfies the equation (4), i.e. the smallest integer multiple of ($p$-1) that is equal to the difference between the product $\{[K_A{}^b + e_B](\text{mod } p)\}^*x$ and 1.

Preferably, the method of establishing a cryptographic communication comprises an iteration process that ends as the condition $[K_A{}^b + e_B]$ (mod $p$) coprime to ($p$-1) is satisfied.

In one embodiment, the method comprises: selecting a first integer $e_B$ as an iteration parameter; checking the coprimeness condition of $\{[K_A{}^b + e_B](\text{mod } p)\}$ to ($p$-1); if the result of checking is negative (i.e. the coprimeness condition is not satisfied), selecting a second integer $e_B$ as an iteration parameter; checking that the second integer satisfies the equation (4); repeating the step of selecting an integer as an iteration parameter and checking the coprimeness condition until the step of checking is positive, and hence the equation (4) is solvable.

In a further embodiment, the method comprises: selecting a first integer $e_B$ as an iteration parameter; checking that the equation (4) can be solved for the first integer $e_B$; if the step of checking is negative, selecting a second integer $e_B$ as an iteration parameter, and repeating the step of selecting an integer as an iteration and check parameter until the equation (4) becomes solvable.

In one embodiment, the integers other than zero are selected in numerical sequence, e.g. a numerical sequence of numbers equal to zero or positive numbers {0, 1, 2, 3, ... }.

According to a further embodiment, the method comprises random selection of a first parameter $e_B$ from a subset of the set of integers. The subset is preferably sufficiently large. For instance, assuming that N is the number of message blocks M into which the message T is divided, such set is given by the numerical range (1, N*10). In this embodiment, the method comprises: defining a subset of integers; selecting a first number as an iteration parameter from the subset; checking that the first number satisfies the equation (4); if the result of checking is negative, selecting a second number as an iteration parameter from the subset in a random fashion or from the first parameter. For instance, the second number is selected such that $e_B=e_B+1$. The method also comprises repeating the step of checking, and if the result of checking is negative, repeating the step of selecting a number as an iteration parameter and the step of checking until the step of checking provides a positive result, i.e. the equation (4) is solvable. For instance, at each iteration, the selection step comprises selecting a new parameter by increasing the number selected in the previous step by one, i.e. $e''_B=e'_B+1$.

For example, if the original message T was divided, during coding, into 100 messages M, the encryption exponent number x will be determined by selecting a random integer as an iteration parameter from a subset of integers in the range (1, 1000), for instance, by random selection using an algorithm for pseudo-random selection in the determined range.

For example, assume that the number randomly selected as a first iteration parameter is 134 and the equation (4) is not verified with such number. Then, the selected number is increased by one unit, whereby an iteration parameter of 135 will be used for the next iteration, and so on until an integer is found as an iteration parameter, that can satisfy the equation (4). This process may be preferred in certain embodiments, as it helps to increase the randomness of the cryptogram.

In one embodiment, the message T is divided into a plurality of message blocks M and for each block M the equation (4) is solved by random selection of the parameter $e_B$ from a subset of the set of the integers and by implementation of a step of checking that the selected parameter solves the equation (4). This will create an independence of the blocks of the plurality of message blocks. For example, encryption of a first message block M1 will provide a cryptogram C and encryption of a second message block M2, where M1 is equal to M2, provides a cryptogram C' other than the cryptogram C for the message M1.

Once the encryption exponent x has been determined by the equation (4), the user B calculates the cryptogram ("ciphertext") C that forms the encrypted message based on the equation (step 107):

$$C \equiv M^x \,(\text{mod } p) \qquad\qquad\qquad (5)$$

The cryptogram C is congruent modulo $p$ to the message M raised to the discrete power x. In other words, the number x is the discrete logarithm modulo $p$ of the number C in base M. It shall be noted that the modular equations (1), (4) and (5) that lead to the definition of the cryptogram C are all injective ("one way") functions, where the inverse of each equation is "impossible" to be calculated without knowing the exponent. In other words, no algorithm is currently known that can determine in a reasonable time the number $b$ and then derive $\{K_A{}^b \,(\text{mod } p)\}$ and hence the number x, although $p$, g and $K_A$ may be publicly known, as they are for users A and B.

Then (step 108), the cryptogram C is transmitted to the recipient unit, possibly with the public key $K_B$ and the parameter $e_B$, if the latter have not been already made available to the user B after the step 104. The transmission of the cryptogram C from the user B (sender unit 2) to the user A (recipient unit 3) is defined by the broken arrow 109.

Once the cryptogram C, the public key $K_B$ and the iteration parameter $e_B$ have been received, the user A uses $K_B$ and $e_B$ to determine a number M' (step 110) by the following equation, which is the inverse of the equation (5):

$$M' \equiv C^{y} \ (\mathrm{mod}\ p) \qquad\qquad (6)$$

where y is the decryption exponent number equal to $\{[K_B{}^a + e_B]\ (\mathrm{mod}\ p)\}$, i.e. given by

$$y = \{[K_B{}^a + e_B]\ (\mathrm{mod}\ p)\}. \qquad\qquad (7)$$

The public key of the user B in the equation (6) is raised, e.g. by the decrypting device of the recipient unit, to the power of the private key of the user A. Thus, the received cryptogram, represented by the number C, is decrypted into a message block M' that matches the original message block M.

Since the public keys are generated by modular exponential equations using the Diffie-Hellman key exchange protocol, i.e. equations (1) and (2), then $K_A{}^b\ (\mathrm{mod}\ p) = K_B{}^a\ (\mathrm{mod}\ p)$ and also

$$[K_A{}^b + e_B]\ (\mathrm{mod}\ p) = [K_B{}^a + e_B](\mathrm{mod}\ p) \qquad\qquad (8)$$

is verified for $e_B \neq 0$. Therefore, the correspondence between M and M' is verified.

The message T' is reconstructed (step 112) by decoding the one or more message blocks M' (step 111), each obtained by decrypting a respective cryptogram C by the equation (6), the decoding step comprising recomposing the one or more message blocks M' thereby obtaining a message T' that matches the message T.

If the coding step comprises dividing the message T into a plurality of message blocks M, in one embodiment the method comprises, after the decryption step (equation (6)), repeating the previous encryption and decryption steps to obtain a plurality of message blocks M', each message block M' matching a message block M of the plurality of message blocks, and decoding the plurality of message blocks M', where decoding comprises recomposing the plurality of message blocks M', thereby obtaining a message T' matching the message T.

If the step of coding the message T comprises the application of a reversible protocol in which a "padding" has been added, the decoding step comprises applying the inverse of the protocol applied during coding, where the "padding" is removed, and then the message T' is recomposed by reassembling the one or more messages M'.

<u>Example</u>

A numerical example is described below of a cryptographic communication established between the sender unit 2 and the recipient unit 3 according to the present invention. The recipient unit 3 uses a prime number $p$=7919 and a generator unit g=7. The recipient unit 3 selects a private key $a$ having six digits, and particularly $a$= 123456.

According to the equation (1), the parameter $K_A$ is given by:

$$K_A \equiv 7^{123456}\ (\mathrm{mod}\ 7919) = 7036,$$

The recipient unit 3 makes the triple of numbers $(p, K_A, g)$ = (7919, 7036, 7) available to the sender unit 2, i.e. shares them with the sender unit.

The sender unit 2 wants to transmit a message T which has, after coding, a message block M=88 matching therewith. The sender unit 2 generates a six-digit private key $b$, particularly $b$=543210, and calculates the public key $K_B$ by the equation (2):

$$K_B \equiv 7^{543210}\ (\mathrm{mod}\ 7919) = 4997$$

The sender unit 2 calculates the parameter x by the equation:

$\{[7036^{543210} + e_B]\ (\mathrm{mod}\ 7919)\} * x \equiv 1\ \mathrm{mod}\ (7919 - 1)$, where $e_B$= 1 is the smallest integer that verifies the equation (4).

Thus, the sender unit determines x = 3009. Using the equation (5), the sender unit 2 calculates the cryptogram C: $C \equiv 88^{3009}\ \mathrm{mod}\ 7919 = 2760$

The sender unit 2 transmits the triple of numbers (C, $K_B$, $e_B$) = (2760, 4997, 1) to the recipient unit 3.

Once the recipient unit 3 has received the triple (C, $K_B$, $e_B$), it decrypts the cryptogram C and determines the message block M', by the equation (6):

$$M' \equiv 2760^{\wedge}\{[\ 4997^{123456} + 1\ ](\mathrm{mod}\ 7919)\}\ (\mathrm{mod}\ 7919),$$

wherefrom M'=88, which value matches the original message block M transmitted by the sender unit.

In a different embodiment, the user B uses a procedure for selecting $e_B$, as described above, from an integer randomly selected from a subset of the set of integers. Since the text to be encrypted is coded, in this example, into a single block (T=M), the number of messages N is equal to 1 and $e_B$ is randomly selected from the range (1, 10). Assuming that $e_B$ is selected as being equal to 6, the equation (4) is not verified. Then, the number randomly selected from the given range is increased by one, and the check process is repeated using $e_B$=7. With $e_B$=7 the equation (4) is verified, which means that $e_B$=7 satisfies the coprimeness condition, whereby x = 5575.

With $e_B$=7, the sender unit determines x = 5575. Using the equation (5), the sender unit 2 calculates the cryptogram C. C= $88^{5575}$ mood 7919 = 2195

The sender unit 2 transmits the triple of numbers (C, $K_B$, $e_B$) = (2195, 4997, 7) to the recipient unit 3.

Once the recipient unit 3 has received the triple (C, $K_B$, $e_B$), it decrypts the received cryptogram C and determines the message block M':

$$M' \equiv 2195^{\wedge}\{[\ 4997^{123456} + 7\ ](\mathrm{mod}\ 7919)\}\ (\mathrm{mod}\ 7919),$$

from this equation M'=88, which value matches the original message block M transmitted by the sender unit.

In one of its main aspects, the method and system of the present invention allows implementation of a method that uses modular exponential equations for encryption and decryption of a message, and that ensures high communication security, as any decryption of the messages by an opponent requires the solution of discrete logarithms and not, as in the RSA method the factorization of large prime numbers. The security of a cryptographic communication established by a RSA method is based on a public key obtained by multiplying two secrete prime numbers having a very large number of digits. Conversely, the security of a cryptographic communication established according to the method and system of the present invention is based on an encryption key, i.e. the encryption exponent, which is the solution of a modular equation determined by the public key of the recipient unit raised to the private key of the sender unit, which public key of the recipient unit has been in turn obtained, in the preferred embodiments, using a modular exponential equation having the private key of the recipient unit as an exponent. Therefore, the encryption equation (equation (5)) comprises both the private key of the sender unit and the private key of the recipient unit, as exponents of the modular equation.

According to certain aspects of the present invention, the method is based on raising numbers to a power in modular arithmetic, and hence on the discrete logarithm problem, which is currently unsolvable by computational means.

The foregoing description relates to cryptographic processing of a message by a first communication unit, to be transmitted to a second communication unit, with a main purpose of not allowing a third communication unit that intercepts the communication to derive the message content. Therefore, according to one of the characteristics of the present solution, the message contents remains "secret" as it can be only decrypted by the message receiving unit.

The Applicant has understood that the method and system of the present invention may be used for digitally signing a message sent from a sender unit to a recipient unit. The message to be signed by a digital signature is not necessarily a confidential message between two users.

According to some embodiments, the cryptogram C defined by the equation (5) is the digital signature of at least one message block M. According to the equation (9), the digital signature is congruent modulo $p$ to the message block M raised to the discrete power $x$, where $x$ is given by the equation (4). The recipient unit makes the public key $K_A$, determined according to the equation (1), and the numbers $p$ and g available, e.g. in a communication channel. The private key $a$ is known to the user A only.

When the user B wants to transmit the digitally signed message $T$ to the recipient unit, the user B selects (or has already selected) an integer $b$ as its own private key and calculates the public key $K_B$ by the equation (2). The sender units signs the block M with the parameters received by the recipient unit.

The user A (recipient unit) receives the cryptogram C and decrypts it using the public key $K_B$ of the sender unit by the equation (6), where y is given by the equation (7), to obtain a message block M' matching the original message block M.

Thus, the message T is reconstructed by the recipient unit, which can thus accept the signature as valid.

Therefore, the recipient unit can check the identity of the user B and hence the authenticity of the message.

In one embodiment, the recipient unit transmits the parameters $K_A$ and the numbers $p$ and g to the sender unit, for the sender unit to use them both for encrypting a first message that has to remain undecryptable by users other from the sender and recipient units and for signing a second message, whose contents are not necessarily secret. According to this embodiment, the sender unit may sign a message without requiring parameters to be known from the recipient unit in addition to those required for encryption of a confidential message, and the recipient unit may readily check the authenticity of the message without asking for additional parameters to the sender unit.

In some embodiments of the present invention, the at least one message block M is the hash value of a message R, obtained by applying a cryptographic hash function to the message R, i.e. $M=h(R)$, the cryptographic function h being known per se. A method of cryptographic processing of a hash value of a message may be advantageous in some embodiments, e.g. if the message R to be sent is a large-size document. In one embodiment, the hash value is of a length equal to an integer k smaller than the integer p, and hence the message T to be cryptographically processed corresponds to M (i.e. T is coded into a single message block).

The cryptographic hash function is preferably selected to minimize the probability that the same hash value can be obtained from different "plaintexts", and that it cannot be reversed, i.e. that the original message cannot be retrieved from the hash value. For example, the cryptographic hash function is the Message Digest algorithm 5 (MD5) or a Secure Hash Algorithm (SHA) published by the National Institute of Standards and Technology (NIST).

In the embodiments in which the at least one message block M is a hash value of a message R ($M=h(R)$), the R message may be public. A cryptogram C (i.e. the digital signature) of the hash value M is thus generated, by the equation (5), and is sent to the user A. Preferably, the user B and the user A share the cryptographic hash function used to generate the message M.

In one embodiment, the digital signature C of the hash value M is attached to the message R sent by the user A, e.g. by adding the string generated by the encryption of M, i.e. the cryptogram C, to the bottom of the message. The user A receives the public key $K_B$ with the message R or has previously received it by the user B, and decrypts C by the equation (6) thereby obtaining a hash value M'. Upon receipt of M', the user A applies the cryptographic hash function to the received message R, if the latter has been transmitted in clear form. If the value h(R) so obtained is equal to M', the authenticity and integrity of the message R will be verified.

## Claims

**1.** A method of cryptographic processing of a message, the method comprising:

establishing a communication between a first communication unit (2) and a second communication unit (3) in a communication domain comprising a communication channel (4); providing a message T by the first communication unit (2);

defining, by the second communication unit (3), an integer $a$ as a first private key and a number $K_A$ as a first public key, the first public key being a number determined based on a prime integer $p$, a generator prime integer $g$ and the first private key;

making the first public key $K_A$ available to the first communication unit;

sharing between the first and the second communication units the number $p$ and the generator number $g$;

defining, by the first communication unit, an integer $b$ as a second private key and a number $K_B$ as a second public key, the second public key being a number determined based on the prime number $p$, the generator number $g$ and the second private key;

determining by the first communication unit an encryption exponent x by means of the equation:

$$\{[K_A{}^b + e_B] \ (\text{mod } p)\} * x \equiv 1 \ \text{mod } (p\text{-}1),$$

where $e_B$ is a parameter selected from the group of integers so that coprimeness between $[K_A{}^b + e_B]$ (mod p) and (p-1) is verified;

coding the message T, where coding comprises dividing the message T into at least one message block M; and encrypting, by the first communication unit, the at least one message block M, thereby obtaining at least one cryptogram C by means of the equation

$$C \equiv M^x \pmod{p}.$$

2. The method as claimed in claim 1, further comprising, after encrypting the at least one message block M:

   making the second public key $K_B$ and the parameter $e_B$ available to the second communication unit;
   transmitting the at least one cryptogram C to the second communication unit through the communication channel;
   determining, by the second communication unit, a decryption exponent $y = \{[K_B{}^a + e_B] \pmod{p}\}$, and
   decrypting the at least one cryptogram C thereby obtaining at least one message block M' by the equation

$$M' \equiv C^y \pmod{p}.$$

3. The method as claimed in claim 2, further comprising, after decrypting the at least one cryptogram C, decoding the at least one message block M' obtained from decryption of the cryptogram C, wherein decoding comprises recomposing the at least one message block M' to obtain a message T'.

4. The method as claimed in claim 2 or 3, wherein the method is a method of establishing a cryptographic communication between the first and second communication units.

5. The method as claimed in any preceding claim, wherein defining an integer b as a second private key comprises selecting, by the first communication unit, an integer coprime to ($p$-1).

6. The method as claimed in any preceding claim, wherein defining a number $a$ as a first private key comprises selecting, by the second communication unit, an integer coprime to ($p$-1).

7. The method as claimed in any preceding claim, wherein the at least one message block M is of length equal to a number k smaller than p.

8. The method as claimed in any preceding claim, wherein the generator prime number $g$ is different from the prime number $p$.

9. The method as claimed in any preceding claim, wherein defining, by the second communication unit, a first public key $K_A$ based on a prime number $p$, a generator prime number g and a number $a$ comprises generating a prime *number p* and a prime number *g*.

10. The method as claimed in any preceding claim, wherein defining a first public key comprises calculating the number $K_A$ from the equation $K_A = g^a \pmod{p}$.

11. The method as claimed in any preceding claim, wherein defining a second public key comprises calculating the number $K_B$ from the equation $K_B = g^b \pmod{p}$.

12. The method as claimed in any preceding claim, wherein making the first public key $K_A$ available and sharing the prime number $p$ and the generator prime number $g$ comprises transmitting, by the second communication unit, the first public key, the prime number $p$ and the generator number g to the first communication unit through the communication channel.

13. The method as claimed in any claim from 2 to 12, wherein making the second public key $K_B$ and $e_B$ available comprises transmitting, by the first communication unit, the second public key and the parameter $e_B$ through the communication channel.

14. A system of cryptographic processing of a message in a communication domain, comprising:

   a first communication unit (2) which comprises a first encrypting device (5), a first coding device (11) and a first transceiver module (9);
   a second communication unit (3) which comprises a first decrypting device (8), a first decoding device (14) and a second transceiver module (10); and

a communication channel (4) apt to connect the first communication unit with the second communication unit by means of the first and second transceiver modules, wherein

the first communication unit is apt to provide a message T;

the second communication unit is apt to define an integer $a$ as a first private key and a number $K_A$ as a first public key, the first public key being a number determined based on a prime number $p$, a generator prime number $g$ and the first private key;

the second transceiver module (10) is apt to transmit the first public key $K_A$ to the first communication unit through the communication channel, the first and second communication units being apt to share the prime number $p$ and the generator prime number g through the communication channel;

the first communication unit is apt to define an integer $b$ as a second private key and a number $K_B$ as a second public key, the second public key being a number determined based on the prime number $p$, the generator number $g$ and the second private key;

the first encrypting device (5) is apt to determine an encryption exponent x by the equation

$$\{[K_A^b + e_B] \ (\mathrm{mod} \ p)\} * \ x \equiv 1 \ \mathrm{mod} \ (p\text{-}1),$$

where $e_B$ is a parameter selected from the group of integers, so that coprimeness between $[K_A^b + e_B]$ (mod p) and (p-1) is verified;

the first coding device (11) is apt to code the message T, where coding comprises dividing the message T into at least one message block M, and

the first encrypting device is apt to encrypt the at least one message block M, thereby obtaining at least one cryptogram C by the equation

$$C \equiv M^x \ (\mathrm{mod} \ p).$$

**15.** The system as claimed in claim 14, wherein the first transceiver module (9) is apt to transmit the at least one cryptogram C, the second public key $K_B$ and the parameter $e_B$ to the second communication unit (3), and

the first decrypting device (8) is apt to determine a decryption exponent number $y=\{[K_B^a + e_B] \ (\mathrm{mod} \ p)\}$, and to decrypt the at least one cryptogram C, thereby obtaining at least one message block M' by the equation

$$M' \equiv C^y \ (\mathrm{mod} \ p).$$

**Patentansprüche**

**1.** Verfahren zur kryptographischen Verarbeitung einer Nachricht, wobei das Verfahren umfasst:

Erstellen einer Kommunikation zwischen einer ersten Kommunikationseinheit (2) und einer zweiten Kommunikationseinheit (3) in einer Kommunikationsdomäne umfassend einen Kommunikationskanal (4);

Bereitstellen einer Nachricht T durch die erste Kommunikationseinheit (2);

Definieren, durch die zweite Kommunikationseinheit (3), einer ganzen Zahl a als erster privater Schlüssel und einer Zahl KA als erster öffentlicher Schlüssel, wobei der erste öffentliche Schlüssel eine Zahl ist, die auf der Grundlage einer Primzahl p, einer Prim Generatorzahl g und des ersten privaten Schlüssels festgelegt ist;

den ersten öffentlichen Schlüssel KA der ersten Kommunikationseinheit zur Verfügung stellen;

Gemeinsame Nutzung durch die erste und zweite Kommunikationseinheit, der Zahl p und der Generatorzahl g;

Definieren, durch die erste Kommunikationseinheit, einer ganzen Zahl b als zweiter privater Schlüssel und einer Zahl $K_B$ als zweiter öffentlicher Schlüssel, wobei der zweite öffentliche Schlüssel eine Zahl ist, die auf der Grundlage der Primzahl p, der Generatorzahl g und des zweiten privaten Schlüssels festgelegt ist;

Bestimmen durch die erste Kommunikationseinheit eines Verschlüsselungexponenten x durch die Gleichung:

$$\{[K_A{}^b + e_B] \ (\mathrm{mod} \ p)\} * x \equiv 1 \ \mathrm{mod} \ (p\text{-}1),$$

wo $e_B$ ein Parameter ausgewählt aus der Gruppe von ganzen Zahlen ist, so dass Teilerfremdheit zwischen $[K_A{}^b + e_B]$ (mod p) und (p-1) gegeben ist;
Codieren der Nachricht T, wobei die Codierung das Aufteilen der Nachricht T in zumindest einen Nachrichtenblock M umfasst; und
Verschlüsseln, durch die erste Kommunikationseinheit, des zumindest einen Nachrichtenblocks M, wodurch mindestens ein Kryptogramm C mit Hilfe der Gleichung

$$C \equiv M^x \ (\mathrm{mod} \ p)$$

erhalten wird.

2. Verfahren nach Anspruch 1, ferner umfassend, nach der Verschlüsselung des zumindest einen Nachrichtenblocks M:

den zweiten öffentlichen Schlüssel $K_B$, und den Parameter $e_B$ der zweiten Kommunikationseinheit zur Verfügung stellen;
Senden des mindestens einen Kryptogramms C an die zweite Kommunikationseinheit über den Kommunikationskanal;
Festlegen, durch die zweite Kommunikationseinheit, eines Entschlüsselungs-Exponenten y = $\{[K_B{}^a + e_B]$ (mod p)$\}$, und
Entschlüsseln des mindestens einen Kryptogramms C wodurch zumindest ein Nachrichtenblock M' durch die Gleichung

$$M' \equiv C^y \ (\mathrm{mod} \ p)$$

erhalten wird.

3. Verfahren nach Anspruch 2, ferner umfassend, nach dem Entschlüsseln des mindestens einen Kryptogramms C, die Decodierung des zumindest einen Nachrichtenblocks M', das durch Entschlüsselung des Kryptogramms C erhalten worden ist, wobei die Decodierung eine Neuzusammensetzung des wenigstens einen Nachrichtenblocks M' umfasst, um eine Nachricht T' zu erhalten.

4. Verfahren nach Anspruch 2 oder 3, wobei das Verfahren ein Verfahren zum Aufbau einer kryptographischen Kommunikation zwischen der ersten und zweiten Kommunikationseinheit ist.

5. Verfahren nach einem der vorhergehenden Ansprüche, bei dem das Definieren einer ganzen Zahl b als zweiten privaten Schlüssels ein Auswählen, durch die erste Kommunikationseinheit, einer ganzen Zahl umfasst, wobei diese ganze Zahl teilerfremd zu (p-1) ist.

6. Verfahren nach einem der vorhergehenden Ansprüche, bei dem das Definieren einer Zahl a als ersten privaten Schlüssel das Auswählen, durch die zweite Kommunikationseinheit, einer Ganzzahl umfasst, die teilerfremd zu (p-1) ist.

7. Verfahren nach einem der vorhergehenden Ansprüche, wobei die Länge des mindestens einen Nachrichtenblocks M einer Zahl k kleiner als p entspricht.

8. Verfahren nach einem der vorhergehenden Ansprüche, wobei die Prim Generatorzahl g sich von der Primzahl p unterscheidet.

9. Verfahren nach einem der vorhergehenden Ansprüche, bei dem das Definieren, durch die zweite Kommunikationseinheit, eines ersten öffentlichen Schlüssels $K_A$ basierend auf einer Primzahl p, einer Prim Generatorzahl g und einer Zahl a das Erzeugen einer Primzahl p und eine Primzahl g umfasst.

10. Verfahren nach einem der vorhergehenden Ansprüche, wobei das Definieren eines ersten öffentlichen Schlüssels die Berechnung der Zahl $K_A$ aus der Gleichung $K_A = g^a \pmod p$ umfasst.

11. Verfahren nach einem der vorhergehenden Ansprüche, wobei das Definieren eines zweiten öffentlichen Schlüssels die Berechnung der Zahl $K_B$ aus der Gleichung $K_B = g^b \pmod p$ umfasst.

12. Verfahren nach einem der vorhergehenden Ansprüche, wobei das Bereitstellen des ersten öffentlichen Schlüssels $K_A$ und die gemeinsame Nutzung der Primzahl p und der Prim Generatorzahl g das Senden, durch die zweite Kommunikationseinheit, des ersten öffentlichen Schlüssels, der Primzahl p und der Generatorzahl g an die erste Kommunikationseinheit über den Kommunikationskanal umfasst.

13. Verfahren nach einem der Ansprüche 2 bis 12, wobei das Bereitstellen des zweiten öffentlichen Schlüssels $K_B$ und $e_B$ das Übertragen, durch die erste Kommunikationseinheit, des zweiten öffentlichen Schlüssels und des Parameters $e_B$ über den Kommunikationskanal umfasst.

14. System zur kryptographischen Verarbeitung einer Nachricht in einer Kommunikationsdomäne, umfassend:

    eine erste Kommunikationseinheit (2), die eine erste Verschlüsselungseinrichtung (5), eine erste Codierungseinrichtung (11) und ein erstes Transceiver-Modul (9) umfasst;
    eine zweite Kommunikationseinheit (3), die eine erste Entschlüsselungseinrichtung (8), eine erste Decodiereinrichtung (14) und ein zweites Transceiver-Modul (10) umfasst, und
    einen Kommunikationskanal (4), der geeignet ist, die erste Kommunikationseinheit mit der zweiten Kommunikationseinheit mit Hilfe des ersten und zweiten Transceiver-Moduls zu verbinden, wobei
    die erste Kommunikationseinheit geeignet ist, eine Nachricht T bereitzustellen;
    die zweite Kommunikationseinheit geeignet ist, eine ganze Zahl a als einen ersten privaten Schlüssel und eine Zahl $K_A$ als erster öffentlicher Schlüssel zu definieren, wobei der erste öffentliche Schlüssel eine Zahl ist, die auf der Grundlage einer Primzahl p, einer Prim Generatorzahl g und des ersten privaten Schlüssel festgelegt ist;
    das zweite Transceiver-Modul (10) geeignet ist, den ersten öffentlichen Schlüssel KA an die erste Kommunikationseinheit über den Kommunikationskanal zu senden, wobei die erste und zweite Kommunikationseinheit geeignet sind, die Primzahl p und die Prim Generatorzahl g durch den Kommunikationskanal zu teilen ;
    die erste Kommunikationseinheit geeignet ist, eine ganze Zahl b als zweiter privater Schlüssel und eine Zahl $K_B$ als zweiter öffentlicher Schlüssel zu definieren, wobei der zweite öffentliche Schlüssel eine Zahl ist, die auf der Grundlage der Primzahl p der Generatorzahl g und des zweiten privaten Schlüssels festgelegt ist;
    die erste Verschlüsselungseinrichtung (5) geeignet ist, einen Verschlüsselungsexponenten x durch die folgende Gleichung zu bestimmen

$$\{[K_A^{\ b} + e_B] \pmod p\} * x \equiv 1 \bmod (p\text{-}1),$$

    wo $e_B$ ein Parameter, ausgewählt aus der Gruppe von ganzen Zahlen, ist, so dass Teilerfremdheit zwischen $[K_A^b + e_B] \pmod p$ und (P-1) gegeben ist;
    die erste Codierungseinrichtung (11) geeignet ist die Nachricht T zu codieren, wobei die Codierung das Aufteilen der Nachricht T in zumindest einen Nachrichtenblock M umfasst, und
    die erste Verschlüsselungsvorrichtung geeignet ist, den mindestens einen Nachrichtenblock M zu verschlüsseln, wodurch mindestens ein Kryptogramm C durch die Gleichung:

$$C \equiv M^x \pmod p$$

    erhalten wird.

15. System nach Anspruch 14, wobei das erste Transceiver-Modul (9) geeignet ist, den mindestens einen Kryptogramm C, den zweiten öffentlichen Schlüssel KB und den Parameter $e_B$ an die zweite Kommunikationseinheit (3), zu übertragen und

die erste Entschlüsselungsvorrichtung (8) geeignet ist, einen Entschlüsselungsexponentenzahl y = {[K_B^a + e_B] (mod p)} zu bestimmen, und das Entschlüsseln des mindestens einen Kryptogramms C durchzuführen, wodurch zumindest ein Nachrichtenblock M' durch die Gleichung

$$M' \equiv C^y \pmod{p}$$

erhalten wird.

## Revendications

1. Un procédé d'élaboration cryptographique d'un message, le procédé comprenant:

établir une communication entre une première unité de communication (2) et une deuxième unité de communication (3) dans un domaine de communication qui comprend un canal de communication (4);

prévoir, de la part de la première unité de communication (2), un message T;

définir, de la part de la deuxième unité de communication (3), un nombre entier $a$ en tant que première clé privée et un nombre $K_A$ en tant que première clé publique, la première clé publique étant un nombre déterminé sur la base d'un nombre premier p, d'un nombre premier générateur $g$ et de la première clé privée;

mettre à disposition de la première unité de communication la première clé publique $K_A$;

partager avec la première unité et la deuxième unité de communication le nombre p et le nombre générateur g;

définir, de part de la première unité de communication, un nombre entier b en tant que deuxième clé privée et un nombre $K_B$ en tant que deuxième clé publique, la deuxième clé publique étant un nombre déterminé sur la base du nombre premier p, du nombre générateur $g$ et de la deuxième clé privée;

déterminer, de la part de la première unité de communication, un nombre exposant de chiffrage x par l'équation :

$$\{[K_A^b + e_B] \pmod{p}\}^* \; x \equiv 1 \bmod (p\text{-}1),$$

là où e_B est un paramètre sélectionné dans le groupe des nombres entiers premiers de façon que $[K_A^b + e_B]$ (mod p) et (p-1) soit copremiers ;

coder le message T, là où coder comprend subdiviser le message T en au moins un bloc de message M; et

chiffrer, de la part de la première unité de communication, l'au moins un bloc de message M en obtenant un cryptogramme C par l'équation

$$C \equiv M^x \pmod{p}.$$

2. Le procédé selon la revendication 1, qui comprend aussi, successivement à chiffrer l'au moins un bloc de message M :

mettre à disposition de la deuxième unité de communication la deuxième clé publique $K_B$ et le paramètre $e_B$;

transmettre, à travers le canal de communication, l'au moins un cryptogramme C à la deuxième unité de communication ;

déterminer, de la part de la deuxième unité de communication, un nombre exposant de déchiffrage y={[K_B^a + e_B] (mod p)}, et

déchiffrer l'au moins un cryptogramme C en obtenant au moins un bloc M' de message par l'équation

$$M' \equiv C^y \pmod{p}.$$

3. Le procédé selon la revendication 2, qui comprend aussi, successivement à déchiffrer l'au moins un cryptogramme C, décoder l'au moins un bloc de message M' obtenu du déchiffrement du cryptogramme C, là où décoder comprend recomposer l'au moins un bloc de message M' de façon à obtenir un message T'.

4. Le procédé selon la revendication 2 ou 3, là où le procédé et un procédé de mise en place d'une communication cryptographique parmi la première et la deuxième unité de communication.

5. Le procédé selon une quelconque des revendications précédentes, là où définir un nombre entier $b$ en tant que deuxième clé privée comprend sélectionner, de la part de la première unité de communication, un nombre entier premier avec $(p\text{-}1)$.

6. Le procédé selon une quelconque des revendications précédentes, là où définir un nombre $a$ en tant que première clé privée comprend sélectionner, de la part de la deuxième unité de communication, un nombre entier premier avec $(p\text{-}1)$.

7. Le procédé selon une quelconque des revendications précédentes, là où l'au moins un bloc de message M a une longueur égale à un nombre k inférieur à p.

8. Le procédé selon une quelconque des revendications précédentes, là où le nombre premier générateur $g$ est différent par rapport au nombre premier $p$.

9. Le procédé selon une quelconque des revendications précédentes, là où définir, de la part de la deuxième unité de communication, une première clé publique $K_A$ sur la base d'un nombre premier $p$, d'un nombre premier générateur $g$ et d'un nombre $a$ comprend générer un nombre premier $p$ et un nombre premier $g$.

10. Le procédé selon une quelconque des revendications précédentes, là où définir une première clé publique comprend calculer le nombre $K_A$ suivant l'équation $K_A \equiv g^a \pmod p$.

11. Le procédé selon une quelconque des revendications précédentes, là où définir une deuxième clé publique comprend calculer le nombre $K_B$ suivant l'équation $K_B \equiv g^b \pmod p$.

12. Le procédé selon une quelconque des revendications précédentes, là où mettre à disposition la première clé publique $K_A$ et partager le nombre $p$ et le nombre générateur $g$ comprend transmettre, de la part de la deuxième unité de communication à travers le canal de communication, la première clé publique, le nombre premier $p$ et le nombre générateur $g$ à la première unité de communication.

13. Le procédé selon une quelconque des revendications de 2 à 12, là où mettre à disposition la deuxième clé publique $K_B$ et $e_B$ comprend transmettre, à travers le canal de communication, de la part de la première unité de communication, la deuxième clé publique et le paramètre $e_B$.

14. Un système d'élaboration cryptographique d'un message dans un domaine de communication qui comprend:

une première unité de communication (2) qui comprend un premier dispositif de chiffrage (5), un premier dispositif de codage (11) et un premier module d'émission-réception (9);
une deuxième unité de communication (3) qui comprend un premier dispositif de déchiffrage (8), un premier dispositif de décodage (14) et un deuxième module d'émission-réception (10); et
un canal de communication (4) apte à relier la première unité de communication avec la deuxième unité de communication par le biais du premier et du deuxième module d'émission-réception, là où
la première unité de communication est apte à prévoir un message T;
la deuxième unité de communication, est apte à définir un nombre entier $a$ en tant que première clé privée et un nombre $K_A$ en tant que première clé publique, la première clé publique étant un nombre déterminé sur la base d'un nombre premier $p$, d'un nombre premier générateur $g$ et de la première clé privée;
le deuxième module d'émission-réception (10) est apte à transmettre à travers le canal de communication la première clé publique $K_A$ à la première unité de communication, la première unité et la deuxième unité de communication étant aptes à partager le nombre $p$ et le nombre générateur $g$ à travers le canal de communication;
la première unité de communication est apte à définir un nombre entier $b$ en tant que deuxième clé privée et un nombre $K_B$ en tant que deuxième clé publique, la deuxième clé publique étant un nombre déterminé sur la base du nombre premier $p$, du nombre générateur $g$ et de la deuxième clé privée;
le premier dispositif de chiffrage (5) est apte à déterminer un nombre exposant de chiffrage x par l'équation

$$\{[K_A{}^b + e_B]\ (\mathrm{mod}\ p)\}^* \ x \equiv 1 \ \mathrm{mod}\ (p\text{-}1),$$

là où $e_B$ est un paramètre sélectionné dans le groupe des nombres entiers premiers de façon que $[K_A{}^b + e_B]$ (mod p) et (p-1) soit copremiers ;

le premier dispositif de codage (11) est apte à coder le message T, là où coder comprend subdiviser le message T en au moins un bloc de message M, et

le premier dispositif de chiffrage est apte à chiffrer l'au moins un bloc de message M en obtenant un cryptogramme C par l'équation

$$C \equiv M^x \ (\mathrm{mod}\ p).$$

**15.** Le système selon la revendication 14, là où le premier module d'émission-réception (9) est apte à transmettre à la deuxième unité de communication (3) l'au moins un cryptogramme C, la deuxième clé publique $K_B$ et le paramètre $e_B$, et

le premier dispositif de déchiffrage (8) est apte à déterminer un nombre exposant de déchiffrage $y = \{[K_B{}^a + e_B]$ (mod p)$\}$, et à déchiffrer l'au moins un cryptogramme C en obtenant au moins un bloc de message M' par l'équation

$$M' \equiv C^y \ (\mathrm{mod}\ p).$$

Figure 1

User B

User A

100 — T

103 — $b$

101 — p, g, $a$

104 — $K_B \equiv g^b (\mathrm{mod}\ p)$

102 — $K_A \equiv g^a (\mathrm{mod}\ p)$

105 — $T \rightarrow M$

106 — $\{[K_A^b + e_B]\ (\mathrm{mod}\ p)\} * x \equiv 1\ \mathrm{mod}\ (p-1)$

107 — $C \equiv M^x\ (\mathrm{mod}\ p)$

108 — $C,\ K_B,\ e_B$

109

110 — $M' \equiv C^y\ (\mathrm{mod}\ p),\ y = \{[K_B^a + e_B]\ (\mathrm{mod}\ p)\}$

111 — $M' \rightarrow T'$

112 — $T'$

Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4405829 A

- IT BO20090383 A

**Non-patent literature cited in the description**

- A practical design for secure broadcasting using P.K.D concept. **JAN J. K. et al.** SECURITY TECHNOLOGY, 1993 SECURITY TECHNOLOGY, PROCEEDINGS. INSTITUTE OF ELECTRICAL AND ELECTRONICS ENGINEERS, 13 October 1993, 22-27

- A Public Key Cryptosystem and a Signature Scheme Based on Discrete Logarithms. **ELGAMAL T.** IEEE TRANSACTIONS ON INFORMATION THEORY. IEEE PRESS, 01 July 1985, vol. 31, 469-472